# EUROPEAN PATENT APPLICATION

(11) **EP 4 410 885 A1**
(43) Date of publication of application: **07.08.2024**
(21) Application number: 22876074.0
(22) Date of filing: 22.09.2022
(51) Int. Cl.: C08L 27/06, B29C 41/18, B29C 41/36, B32B 5/18, B32B 27/22, B32B 27/30, B32B 27/40, C08L 67/00, C08L 71/02

(54) **VINYL CHLORIDE RESIN COMPOSITION, VINYL CHLORIDE RESIN MOLDED BODY, AND LAYERED PRODUCT**

(30) Priority: 30.09.2021 JP 2021162208
(71) Applicant: Zeon Corporation, Tokyo 100-8246 (JP)
(72) Inventor: FUJIWARA, Takanori, Tokyo 100-8246 (JP)
(74) Representative: Maiwald GmbH
(86) International application number: PCT/JP2022/035527
(87) International publication number: WO 2023/054207

(57) **Abstract**

Provided is a vinyl chloride resin composition that is capable of forming a vinyl chloride resin molded product having excellent fogging resistance. The vinyl chloride resin composition contains a vinyl chloride resin, a polyester plasticizer, and a polyalkylene glycol. The vinyl chloride resin composition is preferably used in powder molding.

## Description

### TECHNICAL FIELD

The present disclosure relates to a vinyl chloride resin composition, a vinyl chloride resin molded product, and a laminate.

### BACKGROUND

Vinyl chloride resins are used in a variety of applications due to generally having excellent characteristics in terms of cold resistance, heat resistance, oil resistance, and so forth.

Specifically, automobile interior materials such as a surface skin formed of a vinyl chloride resin molded product and a laminate obtained by lining a surface skin formed of a vinyl chloride resin molded product with a foamed product such as foamed polyurethane are used in the formation of automobile interior components such as automobile instrument panels and door trims.

A vinyl chloride resin molded product that constitutes a surface skin of an automobile interior component such as an automobile instrument panel is produced, for example, by performing molding by a powder molding method such as powder slush molding with respect to a vinyl chloride resin composition that contains a vinyl chloride resin, a plasticizer, and additives (for example, refer to Patent Literature (PTL) 1).

As one specific example, a vinyl chloride resin molded product is produced in PTL 1 through powder slush molding of a vinyl chloride resin composition that contains vinyl chloride resin particles, a plasticizer such as a polyester plasticizer, and additives such as a hydrotalcite stabilizer, a zeolite stabilizer, and a β-diketone.

### CITATION LIST

### Patent Literature

PTL 1: JP2012-197394A

### SUMMARY

### (Technical Problem)

In a situation in which a vinyl chloride resin molded product is used as an automobile interior material or the like, for example, a volatile component contained in the vinyl chloride resin molded product may vaporize at high temperature and then become attached to and condense on an inner surface of window glass cooled by external air, resulting in the occurrence of clouding of the window glass. This phenomenon is also referred to as fogging. It is desirable for a vinyl chloride resin molded product to inhibit fogging such as described above (i.e., have fogging resistance) from a viewpoint of maintaining a good field of vision from window glass.

However, there is room for improvement of the fogging resistance of a vinyl chloride resin molded product that is formed using the vinyl chloride resin composition of the conventional technique described above that contains a polyester plasticizer.

Accordingly, one object of the present disclosure is to provide a vinyl chloride resin composition that is capable of forming a vinyl chloride resin molded product having excellent fogging resistance.

Another object of the present disclosure is to provide a vinyl chloride resin molded product having excellent fogging resistance.

Yet another object of the present disclosure is to provide a laminate including this vinyl chloride resin molded product.

### (Solution to Problem)

The inventor conducted diligent investigation with the aim of solving the problem set forth above. The inventor discovered that by adding a polyalkylene glycol to a vinyl chloride resin composition containing a polyester plasticizer, it is possible to cause a vinyl chloride resin molded product formed using the vinyl chloride resin composition to display excellent fogging resistance, and, in this manner, completed the present disclosure.

Specifically, the present disclosure aims to advantageously solve the problem set forth above, and [1] a presently disclosed vinyl chloride resin composition comprises a vinyl chloride resin, a polyester plasticizer, and a polyalkylene glycol.

With a vinyl chloride resin composition that contains a vinyl chloride resin, a polyester plasticizer, and a polyalkylene glycol in this manner, it is possible to form a vinyl chloride resin molded product having excellent fogging resistance.

[2] In the vinyl chloride resin composition according to the foregoing [1], content of the polyalkylene glycol is preferably not less than 0.1 parts by mass and not more than 10 parts by mass relative to 100 parts by mass of the vinyl chloride resin.

When the content of the polyalkylene glycol in the vinyl chloride resin composition is within the specific range set forth above, fogging resistance of a formed vinyl chloride resin molded product can be further improved, and tensile characteristics of the vinyl chloride resin molded product can also be improved.

[3] In the vinyl chloride resin composition according to the foregoing [1] or [2], the polyalkylene glycol preferably has a weight-average molecular weight of 1,000 or less.

When the weight-average molecular weight of the polyalkylene glycol is not more than the specific value set forth above, fogging resistance of a formed vinyl chloride resin molded product can be further improved.

Note that the "weight-average molecular weight" of the polyalkylene glycol referred to in the present disclosure can be determined as a polystyrene-equivalent value through gel permeation chromatography (GPC) with N-methylpyrrolidone as a solvent.

[4] In the vinyl chloride resin composition according to any one of the foregoing [1] to [3], the polyalkylene glycol preferably has a melting point of 20°C or lower.

When the melting point of the polyalkylene glycol is not higher than the specific value set forth above, fogging resistance of a formed vinyl chloride resin molded product can be further improved.

Note that the "melting point" of the polyalkylene glycol referred to in the present disclosure can be measured in accordance with JIS K 7121 by a differential scanning calorimeter (DSC).

[5] In the vinyl chloride resin composition according to any one of the foregoing [1] to [4], the polyalkylene glycol preferably includes either or both of polyethylene glycol and polypropylene glycol.

When either or both of polyethylene glycol and polypropylene glycol are used as the polyalkylene glycol, fogging resistance of a formed vinyl chloride resin molded product can be further improved.

[6] In the vinyl chloride resin composition according to any one of the foregoing [1] to [5], the polyester plasticizer preferably includes an adipic acid polyester.

When an adipic acid polyester is used as the polyester plasticizer, heat shrinkage resistance of a formed vinyl chloride resin molded product can be improved.

[7] In the vinyl chloride resin composition according to any one of the foregoing [1] to [6], content of the polyester plasticizer is preferably not less than 30 parts by mass and not more than 200 parts by mass relative to 100 parts by mass of the vinyl chloride resin.

When the content of the polyester plasticizer in the vinyl chloride resin composition is within the specific range set forth above, tensile characteristics and heat shrinkage resistance of a formed vinyl chloride resin molded product can be improved, and sufficiently high fogging resistance of the vinyl chloride resin molded product can be ensured.

[8] The vinyl chloride resin composition according to any one of the foregoing [1] to [7] is preferably used in powder molding.

By using the vinyl chloride resin composition in powder molding, it is easy to obtain a vinyl chloride resin molded product that can be used well as an automobile interior material such as a surface skin for an automobile instrument panel, for example.

[9] The vinyl chloride resin composition according to any one of the foregoing [1] to [8] is preferably used in powder slush molding.

By using the vinyl chloride resin composition in powder slush molding, it is even easier to obtain a vinyl chloride resin molded product that can be used well as an automobile interior material such as a surface skin for an automobile instrument panel, for example.

Moreover, the present disclosure aims to advantageously solve the problem set forth above, and [10] a presently disclosed vinyl chloride resin molded product is obtained through molding of the vinyl chloride resin composition according to any one of the foregoing [1] to [9].

A vinyl chloride resin molded product that is obtained through molding of the vinyl chloride resin composition set forth above in this manner can be used well as an automobile interior material because the vinyl chloride resin molded product has excellent fogging resistance.

[11] The vinyl chloride resin molded product according to the foregoing [10] is preferably for a surface skin of an automobile instrument panel.

By using the presently disclosed vinyl chloride resin molded product as a surface skin of an automobile instrument panel, it is possible to produce an automobile instrument panel having a surface skin with excellent fogging resistance.

Furthermore, the present disclosure aims to advantageously solve the problem set forth above, and [12] a presently disclosed laminate comprises: a foamed polyurethane molded product; and the vinyl chloride resin molded product according to the foregoing [10] or [11].

A laminate that includes a foamed polyurethane molded product and the vinyl chloride resin molded product set forth above has a vinyl chloride resin molded product part with excellent fogging resistance.

[13] The laminate according to the foregoing [12] is preferably for an automobile instrument panel.

By using the presently disclosed laminate as an automobile instrument panel in this manner, it is possible to improve fogging resistance of a surface skin of the produced automobile instrument panel.

### (Advantageous Effect)

According to the present disclosure, it is possible to provide a vinyl chloride resin composition that is capable of forming a vinyl chloride resin molded product having excellent fogging resistance.

Moreover, according to the present disclosure, it is possible to provide a vinyl chloride resin molded product having excellent fogging resistance.

Furthermore, according to the present disclosure, it is possible to provide a laminate including this vinyl chloride resin molded product.

### DETAILED DESCRIPTION

The following provides a detailed description of embodiments of the present disclosure.

The presently disclosed vinyl chloride resin composition can be used, for example, in formation of the presently disclosed vinyl chloride resin molded product. Moreover, a vinyl chloride resin molded product formed using the presently disclosed vinyl chloride resin composition can suitably be used, for example, as an automobile interior material such as a surface skin included in an automobile interior component such as an automobile instrument panel or a door trim.

The presently disclosed vinyl chloride resin molded product can be used, for example, in formation of the presently disclosed laminate. Moreover, a laminate formed using the presently disclosed vinyl chloride resin molded product can suitably be used, for example, as an automobile interior material used in production of an automobile interior component such as an automobile instrument panel or a door trim.

### (Vinyl chloride resin composition)

A feature of the presently disclosed vinyl chloride resin composition is that it contains: (a) a vinyl chloride resin; (b) a polyester plasticizer; and (c) a polyalkylene glycol.

Note that the presently disclosed vinyl chloride resin composition may optionally further contain plasticizers other than the (b) polyester plasticizer mentioned above (hereinafter, also referred to as "(d) other plasticizers").

Moreover, the presently disclosed vinyl chloride resin composition may optionally further contain additives other than the (a) vinyl chloride resin, (b) polyester plasticizer, (c) polyalkylene glycol, and (d) other plasticizers mentioned above.

With the presently disclosed vinyl chloride resin composition, it is possible to form a vinyl chloride resin molded product having excellent fogging resistance.

Consequently, by using the presently disclosed vinyl chloride resin composition, it is possible to obtain a vinyl chloride resin molded product that is suitable as an automobile interior material, such as a surface skin for an automobile instrument panel or a surface skin for a door trim, having excellent fogging resistance.

Note that from a viewpoint of easily obtaining a vinyl chloride resin molded product that can be used well as an automobile interior material using the presently disclosed vinyl chloride resin composition, for example, the presently disclosed vinyl chloride resin composition is preferably used in powder molding, and is more preferably used in powder slush molding.

### <(a) Vinyl chloride resin>

A particulate vinyl chloride resin is normally used as the (a) vinyl chloride resin. For example, one type or two or more types of vinyl chloride resin particles can be included as the (a) vinyl chloride resin, and one type or two or more types of vinyl chloride resin fine particles can optionally be further included as the (a) vinyl chloride resin. In particular, the (a) vinyl chloride resin preferably includes at least vinyl chloride resin particles, and more preferably includes vinyl chloride resin particles and vinyl chloride resin fine particles.

The (a) vinyl chloride resin can be produced by a conventionally known production method such as suspension polymerization, emulsion polymerization, solution polymerization, or bulk polymerization.

In the present specification, the term "resin particles" is used to refer to particles having a particle diameter of 30 µm or more, whereas the term "resin fine particles" is used to refer to particles having a particle diameter of less than 30 µm.

Examples of the (a) vinyl chloride resin include homopolymers composed of vinyl chloride monomer units and vinyl chloride copolymers preferably comprising 50 mass% or more of vinyl chloride monomer units, and more preferably comprising 70 mass% or more of vinyl chloride monomer units. Specific examples of monomers (comonomers) that are copolymerizable with vinyl chloride monomer and can be used to form a vinyl chloride copolymer include monomers described in WO2016/098344A1, for example. One of these components may be used individually, or two or more of these components may be used in combination in a freely selected ratio.

### «Vinyl chloride resin particles»

In the vinyl chloride resin composition, the vinyl chloride resin particles normally function as a matrix resin (base material). The vinyl chloride resin particles are preferably produced by suspension polymerization.

### [Average degree of polymerization]

The average degree of polymerization of a vinyl chloride resin forming the vinyl chloride resin particles is preferably 800 or more, and more preferably 1,000 or more, and is preferably 5,000 or less, more preferably 3,000 or less, and even more preferably 2,800 or less. This is because sufficient physical strength of a vinyl chloride resin molded product formed using the vinyl chloride resin composition can be ensured while also improving tensile characteristics (particularly tensile elongation) of the vinyl chloride resin molded product, for example, when the average degree of polymerization of the vinyl chloride resin forming the vinyl chloride resin particles is not less than any of the lower limits set forth above. A vinyl chloride resin molded product having good tensile elongation can suitably be used as an automobile interior material, such as a surface skin of an automobile instrument panel, that has excellent ductility and that ruptures as designed without scattering of fragments when an airbag expands and is deployed, for example. Moreover, meltability of the vinyl chloride resin composition can be improved when the average degree of polymerization of the vinyl chloride resin forming the vinyl chloride resin particles is not more than any of the upper limits set forth above.

Furthermore, the average degree of polymerization of the vinyl chloride resin forming the vinyl chloride resin particles may be 1,700 or more, or may be 1,700 or less.

The "average degree of polymerization" referred to in the present disclosure can be measured in accordance with JIS K6720-2.

### [Average particle diameter]

The average particle diameter of the vinyl chloride resin particles is normally 30 µm or more, preferably 50 µm or more, and more preferably 100 µm or more, and is preferably 500 µm or less, and more preferably 200 µm or less. This is because powder fluidity of the vinyl chloride resin composition improves when the average particle diameter of the vinyl chloride resin particles is not less than any of the lower limits set forth above. Moreover, meltability of the vinyl chloride resin composition further improves and surface smoothness of a vinyl chloride resin molded product formed using the composition can also be improved when the average particle diameter of the vinyl chloride resin particles is not more than any of the upper limits set forth above.

Furthermore, the average particle diameter of the vinyl chloride resin particles may be 130 µm or more, or may be 130 µm or less.

The "average particle diameter" referred to in the present disclosure can be measured as the volume-average particle diameter by laser diffraction in accordance with JIS Z8825.

### [Proportional content]

The proportional content of the vinyl chloride resin particles in the (a) vinyl chloride resin is preferably 70 mass% or more, and more preferably 80 mass% or more, can be 100 mass%, and is preferably 95 mass% or less, and more preferably 90 mass% or less. This is because sufficient physical strength of a vinyl chloride resin molded product formed using the vinyl chloride resin composition can be ensured while also improving tensile elongation of the vinyl chloride resin molded product when the proportional content of the vinyl chloride resin particles in the (a) vinyl chloride resin is not less than any of the lower limits set forth above. Moreover, powder fluidity of the vinyl chloride resin composition improves when the proportional content of the vinyl chloride resin particles in the (a) vinyl chloride resin is not more than any of the upper limits set forth above.

Furthermore, the proportional content of the vinyl chloride resin particles in the (a) vinyl chloride resin may be 86 mass% or more, or may be 87 mass% or less.

### «Vinyl chloride resin fine particles»

In the vinyl chloride resin composition, the vinyl chloride resin fine particles normally function as a dusting agent (powder fluidity modifier). The vinyl chloride resin fine particles are preferably produced by emulsion polymerization.

### [Average degree of polymerization]

The average degree of polymerization of a vinyl chloride resin forming the vinyl chloride resin fine particles is preferably 500 or more, and more preferably 700 or more, and is preferably 2,600 or less, and more preferably 2,400 or less. This is because powder fluidity of the vinyl chloride resin composition improves and tensile elongation of a molded product obtained using the composition also improves when the average degree of polymerization of the vinyl chloride resin forming the vinyl chloride resin fine particles that serve as a dusting agent is not less than any of the lower limits set forth above. Moreover, meltability of the vinyl chloride resin composition improves and surface smoothness of a vinyl chloride resin molded product formed using the composition also improves when the average degree of polymerization of the vinyl chloride resin forming the vinyl chloride resin fine particles is not more than any of the upper limits set forth above.

Furthermore, the average degree of polymerization of the vinyl chloride resin forming the vinyl chloride resin fine particles may be 800 or more, or may be 800 or less.

### [Average particle diameter]

The average particle diameter of the vinyl chloride resin fine particles is normally less than 30 µm, preferably 10 µm or less, and more preferably 5 µm or less, and is preferably 0.1 µm or more, and more preferably 1 µm or more. This is because the vinyl chloride resin fine particles are not too small to function as a dusting agent, for example, and powder fluidity of the vinyl chloride resin composition improves when the average particle diameter of the vinyl chloride resin fine particles is not less than any of the lower limits set forth above. Moreover, meltability of the vinyl chloride resin composition further increases and surface smoothness of a formed vinyl chloride resin molded product can be further improved when the average particle diameter of the vinyl chloride resin fine particles is not more than any of the upper limits set forth above.

Note that the average particle diameter of the vinyl chloride resin fine particles may be 1.8 µm or more, or may be 1.8 µm or less.

### [Proportional content]

The proportional content of the vinyl chloride resin fine particles in the (a) vinyl chloride resin may be 0 mass%, but is preferably 5 mass% or more, and more preferably 10 mass% or more, and is preferably 30 mass% or less, and more preferably 20 mass% or less. This is because powder fluidity of the vinyl chloride resin composition improves when the proportional content of the vinyl chloride resin fine particles in the (a) vinyl chloride resin is not less than any of the lower limits set forth above. Moreover, physical strength of a vinyl chloride resin molded product formed using the vinyl chloride resin composition can be further increased when the proportional content of the vinyl chloride resin fine particles in the (a) vinyl chloride resin is not more than any of the upper limits set forth above.

Note that the proportional content of the vinyl chloride resin fine particles in the (a) vinyl chloride resin may be 13 mass% or more, or may be 14 mass% or less.

### <(b) Polyester plasticizer>

The (b) polyester plasticizer is a component that can impart adequate tensile characteristics (tensile strength and tensile elongation) to a vinyl chloride resin molded product formed using the vinyl chloride resin composition. Moreover, in a situation in which a laminate is formed by lining a vinyl chloride resin molded product formed using the vinyl chloride resin composition with a foamed polyurethane molded product, the use of the (b) polyester plasticizer as a plasticizer makes it possible to improve heat shrinkage resistance of the vinyl chloride resin molded product because the (b) polyester plasticizer tends not to migrate to the foamed polyurethane molded product from the vinyl chloride resin molded product even at high temperature.

A polyester such as a polyester including a structural unit derived from adipic acid (adipic acid polyester), a polyester including a structural unit derived from sebacic acid (sebacic acid polyester), or a polyester including a structural unit derived from phthalic acid (phthalic acid polyester), for example, can be used as the (b) polyester plasticizer without any specific limitations. One of these polyesters may be used individually, or two or more of these polyesters may be used as a mixture in a freely selected ratio.

In particular, from a viewpoint of further increasing heat shrinkage resistance of a vinyl chloride resin molded product, it is preferable that an adipic acid polyester (polyester including an adipic acid-derived structural unit) is used as the (b) polyester plasticizer.

From a viewpoint of further improving fogging resistance of a formed vinyl chloride resin molded product, the viscosity of the (b) polyester plasticizer is preferably 500 mPa·s or more, more preferably 1,000 mPa·s or more, and even more preferably 3,000 mPa·s or more, and is preferably 8,000 mPa·s or less, more preferably 5,000 mPa·s or less, even more preferably 4,000 mPa·s or less, and further preferably 3,500 mPa·s or less.

Note that the "viscosity" can be measured in accordance with JIS Z8803 at a temperature of 23°C.

Moreover, from a viewpoint of further improving fogging resistance of a formed vinyl chloride resin molded product, an SP value of the (b) polyester plasticizer is preferably 8 or more, more preferably 8.4 or more, even more preferably 8.6 or more, and further preferably 8.8 or more, and is preferably 9.6 or less, more preferably 9.4 or less, even more preferably 9.2 or less, and further preferably 9 or less.

Note that the term "SP value" refers to a solubility parameter.

The SP value can be calculated by a method described in "Hansen Solubility Parameters: A User's Handbook, 2nd Ed. (CRC Press)".

Furthermore, the SP value of an organic compound can be estimated based on the molecular structure of the organic compound. Specifically, the SP value can be calculated using simulation software that can calculate an SP value from a SMILE formula (for example, HSPiP (http=//www.hansen-solubility.com)). This simulation software determines the SP value based on the theory described in "Hansen Solubility Parameters: A User's Handbook, 2nd Ed., Charles M. Hansen".

Note that the units of SP values in the present specification are "(cal/cm³)^{1/2}", unless otherwise specified.

The content of the (b) polyester plasticizer in the vinyl chloride resin composition is preferably 30 parts by mass or more, more preferably 50 parts by mass or more, even more preferably 70 parts by mass or more, further preferably 90 parts by mass or more, and even further preferably 100 parts by mass or more relative to 100 parts by mass of the (a) vinyl chloride resin, and is preferably 200 parts by mass or less, more preferably 180 parts by mass or less, even more preferably 150 parts by mass or less, further preferably 130 parts by mass or less, and even further preferably 120 parts by mass or less relative to 100 parts by mass of the (a) vinyl chloride resin. When the content of the (b) polyester plasticizer in the vinyl chloride resin composition is not less than any of the lower limits set forth above, tensile characteristics (particularly tensile elongation) and heat shrinkage resistance of a formed vinyl chloride resin molded product can be improved. On the other hand, when the content of the (b) polyester plasticizer in the vinyl chloride resin composition is not more than any of the upper limits set forth above, tensile characteristics (particularly tensile strength) of a formed vinyl chloride resin molded product can be improved. Moreover, sufficiently high fogging resistance of a formed vinyl chloride resin molded product can be ensured.

Note that the content of the (b) polyester plasticizer in the vinyl chloride resin composition may be 103 parts by mass or more relative to 100 parts by mass of the (a) vinyl chloride resin, or may be 104 parts by mass or less relative to 100 parts by mass of the (a) vinyl chloride resin.

### <(c) Polyalkylene glycol>

The (c) polyalkylene glycol is a component that can impart excellent fogging resistance to a vinyl chloride resin molded product.

The (c) polyalkylene glycol is not specifically limited and may, for example, be a polymer that is obtained through addition polymerization of an alkylene oxide by a known method and that includes a structural unit derived from the alkylene oxide (hereinafter, also referred to as an "alkylene oxide monomer unit") in a molecule thereof.

The alkylene oxide that can be used in production of the (c) polyalkylene glycol is preferably an alkylene oxide having a carbon number of not less than 2 and not more than 10, more preferably an alkylene oxide having a carbon number of not less than 2 and not more than 5, and even more preferably an alkylene oxide having a carbon number of not less than 2 and not more than 3. Note that just one alkylene oxide may be used or a mixture of two or more alkylene oxides in a freely selected ratio may be used in production of the (c) polyalkylene glycol.

Although the (c) polyalkylene glycol may further include structural units derived from compounds other than the alkylene oxide (i.e., other monomer units) as repeating units in a molecule thereof, the proportional content of alkylene oxide monomer units in the (c) polyalkylene glycol is preferably 50 mass% or more, more preferably 70 mass% or more, even more preferably 90 mass% or more, and may be 100 mass%. In other words, the (c) polyalkylene glycol may just include alkylene oxide monomer units without including other monomer units.

Although the (c) polyalkylene glycol may have a hydroxy group (-OH) or may have a functional group other than a hydroxy group (for example, a carboxyl group, an amino group, or an alkyl group having a carbon number of not less than 1 and not more than 10) at the end of a molecule thereof, a hydroxy group is preferable.

Polyethylene glycol, polypropylene glycol, polybutylene glycol, or the like can be used as the (c) polyalkylene glycol, with the use of either or both of polyethylene glycol and polypropylene glycol being preferable from a viewpoint of further improving fogging resistance of a formed vinyl chloride resin molded product, and the use of polyethylene glycol being more preferable from a viewpoint of improving tensile elongation of a formed vinyl chloride resin molded product.

The weight-average molecular weight of the (c) polyalkylene glycol is preferably 200 or more, more preferably 250 or more, even more preferably 280 or more, further preferably 320 or more, and even further preferably 340 or more, and is preferably 1,000 or less, more preferably 900 or less, even more preferably 800 or less, further preferably 700 or less, and even further preferably 600 or less. When the weight-average molecular weight of the (c) polyalkylene glycol is within any of the specific ranges set forth above, fogging resistance of a formed vinyl chloride resin molded product can be further improved.

Note that the weight-average molecular weight of the (c) polyalkylene glycol may be 400 or more, or may be 400 or less.

Also note that in a case in which either or both of polyethylene glycol and polypropylene glycol are used as the (c) polyalkylene glycol, the weight-average molecular weight of each of the polyethylene glycol and the polypropylene glycol is the same as the preferable ranges set forth above. Moreover, the weight-average molecular weight of the polyethylene glycol is even further preferably 580 or less, and particularly preferably 560 or less. When the weight-average molecular weight of polyethylene glycol serving as the (c) polyalkylene glycol is not more than any of the specific values set forth above, fogging resistance of a formed vinyl chloride resin molded product can be even further improved.

The melting point of the (c) polyalkylene glycol is preferably -50°C or higher, more preferably -35°C or higher, and even more preferably -31°C or higher, and is preferably 20°C or lower, more preferably 15°C or lower, even more preferably 13°C or lower, further preferably 11°C or lower, even further preferably 9°C or lower, and even more preferably 8°C or lower. When the melting point of the (c) polyalkylene glycol is within any of the specific ranges set forth above, fogging resistance of a formed vinyl chloride resin molded product can be further improved.

Note that in a case in which either or both of polyethylene glycol and polypropylene glycol are used as the (c) polyalkylene glycol, the melting point of each of the polyethylene glycol and the polypropylene glycol is the same as the preferable ranges set forth above. Moreover, the melting point of the polyethylene glycol is even more preferably -15°C or higher, further preferably -5°C or higher, even further preferably 0°C or higher, and even more preferably 4°C or higher. When the melting point of polyethylene glycol serving as the (c) polyalkylene glycol is not lower than any of the specific values set forth above, fogging resistance of a formed vinyl chloride resin molded product can be even further improved.

The content of the (c) polyalkylene glycol in the vinyl chloride resin composition is preferably 0.1 parts by mass or more, more preferably 0.5 parts by mass or more, even more preferably 0.7 parts by mass or more, further preferably 1 part by mass or more, and even further preferably 1.5 parts by mass or more relative to 100 parts by mass of the (a) vinyl chloride resin, and is preferably 10 parts by mass or less, more preferably 7 parts by mass or less, even more preferably 5 parts by mass or less, further preferably 4 parts by mass or less, and even further preferably 3 parts by mass or less relative to 100 parts by mass of the (a) vinyl chloride resin. When the content of the (c) polyalkylene glycol in the vinyl chloride resin composition relative to 100 parts by mass of the (a) vinyl chloride resin is within any of the specific ranges set forth above, fogging resistance of a formed vinyl chloride resin molded product can be further improved, and tensile characteristics of the vinyl chloride resin molded product can also be improved.

Moreover, the content of the (c) polyalkylene glycol in the vinyl chloride resin composition may be 1.7 parts by mass or more relative to 100 parts by mass of the (a) vinyl chloride resin, or may be 1.8 parts by mass or less relative to 100 parts by mass of the (a) vinyl chloride resin.

The content of the (c) polyalkylene glycol in the vinyl chloride resin composition is preferably 0.1 parts by mass or more, more preferably 0.5 parts by mass or more, even more preferably 0.7 parts by mass or more, further preferably 1 part by mass or more, and even further preferably 1.5 parts by mass or more relative to 100 parts by mass of the (b) polyester plasticizer, and is preferably 10 parts by mass or less, more preferably 7 parts by mass or less, even more preferably 5 parts by mass or less, further preferably 3 parts by mass or less, and even further preferably 2.5 parts by mass or less relative to 100 parts by mass of the (b) polyester plasticizer. When the content of the (c) polyalkylene glycol in the vinyl chloride resin composition relative to 100 parts by mass of the (b) polyester plasticizer is within any of the specific ranges set forth above, fogging resistance of a formed vinyl chloride resin molded product can be further improved, and tensile characteristics (particularly tensile strength) of the vinyl chloride resin molded product can also be improved.

Moreover, the content of the (c) polyalkylene glycol in the vinyl chloride resin composition may be 1.6 parts by mass or more relative to 100 parts by mass of the (b) polyester plasticizer, or may be 1.7 parts by mass or less relative to 100 parts by mass of the (b) polyester plasticizer.

### <(d) Other plasticizers>

The presently disclosed vinyl chloride resin composition may optionally further contain (d) other plasticizers besides the (b) polyester plasticizer described above.

Specific examples of (d) other plasticizers include plasticizers other than the above-described (b) polyester plasticizer among plasticizers that are described in WO2016/098344A1. Of these plasticizers, epoxidized vegetable oil is preferable from a viewpoint of further enhancing tensile characteristics (tensile strength and tensile elongation) of a formed vinyl chloride resin molded product, and epoxidized soybean oil is more preferable.

The content of (d) other plasticizers in the vinyl chloride resin composition is not specifically limited and can be set as not less than 0 parts by mass and not more than 15 parts by mass relative to 100 parts by mass of the (a) vinyl chloride resin.

Moreover, in a case in which epoxidized vegetable oil such as epoxidized soybean oil is used as (d) another plasticizer, the content of the epoxidized vegetable oil serving as the (d) other plasticizer is preferably 2 parts by mass or more, more preferably 3 parts by mass or more, and even more preferably 4 parts by mass or more relative to 100 parts by mass of the (a) vinyl chloride resin, and is preferably 10 parts by mass or less, and more preferably 7 parts by mass or less relative to 100 parts by mass of the (a) vinyl chloride resin from a viewpoint of improving tensile strength of a formed vinyl chloride resin molded product.

Also, although the content of (d) other plasticizers in the vinyl chloride resin composition is not specifically limited, the content can be set as not less than 0 parts by mass and not more than 15 parts by mass relative to 100 parts by mass of the (b) polyester plasticizer.

Moreover, in a case in which epoxidized vegetable oil such as epoxidized soybean oil is used as (d) another plasticizer, the content of the epoxidized vegetable oil serving as the (d) other plasticizer is preferably 2 parts by mass or more, more preferably 3 parts by mass or more, and even more preferably 4 parts by mass or more relative to 100 parts by mass of the (b) polyester plasticizer, and is preferably 10 parts by mass or less, and more preferably 7 parts by mass or less relative to 100 parts by mass of the (b) polyester plasticizer from a viewpoint of improving tensile strength of a formed vinyl chloride resin molded product.

### <Additives>

The presently disclosed vinyl chloride resin composition may further contain various additives besides the components set forth above. Examples of additives that may be used include, but are not specifically limited to, lubricants; stabilizers such as perchloric acid-treated hydrotalcite, zeolites, β-diketones, and fatty acid metal salts; mold release agents; dusting agents other than the previously described vinyl chloride resin fine particles; impact modifiers; perchloric acid compounds other than perchloric acid-treated hydrotalcite (sodium perchlorate, potassium perchlorate, etc.); antioxidants; fungicides; flame retardants; antistatic agents; fillers; light stabilizers; foaming agents; and pigments.

Additives that are described in WO2016/098344A1, for example, can be used as the aforementioned additives that can be contained in the presently disclosed vinyl chloride resin composition, and suitable amounts thereof can also be the same as described in WO2016/098344A1.

### <Production method of vinyl chloride resin composition>

The presently disclosed vinyl chloride resin composition can be produced by mixing the components described above.

Although no specific limitations are placed on the mixing method of the (a) vinyl chloride resin, (b) polyester plasticizer, and (c) polyalkylene glycol and also (d) other plasticizers and various additives that are further compounded as necessary, a method in which components other than a dusting agent (inclusive of vinyl chloride resin fine particles) are mixed by dry blending and then the dusting agent is subsequently added and mixed therewith, for example, may be adopted. The dry blending is preferably carried out using a Henschel mixer. Although the temperature during dry blending is not specifically limited, the temperature is preferably 50°C or higher, and more preferably 70°C or higher, and is preferably 200°C or lower.

### <Use of vinyl chloride resin composition>

The obtained vinyl chloride resin composition can suitably be used in powder molding, and can more suitably be used in powder slush molding.

### (Vinyl chloride resin molded product)

A feature of the presently disclosed vinyl chloride resin molded product is that it is obtained by molding the vinyl chloride resin composition set forth above by any method. As a result of the presently disclosed vinyl chloride resin molded product being formed using the vinyl chloride resin composition set forth above, the presently disclosed vinyl chloride resin molded product normally contains at least the (a) vinyl chloride resin, (b) polyester plasticizer, and (c) polyalkylene glycol. Moreover, the presently disclosed vinyl chloride resin molded product has excellent fogging resistance.

Therefore, the presently disclosed vinyl chloride resin molded product can suitably be used as an automobile interior material such as a surface skin of an automobile instrument panel.

### <Formation method of vinyl chloride resin molded product>

Although no specific limitations are placed on the mold temperature in powder slush molding in a situation in which the vinyl chloride resin molded product is formed by powder slush molding, the mold temperature is preferably 200°C or higher, and more preferably 220°C or higher, and is preferably 300°C or lower, and more preferably 280°C or lower.

The following method, for example, may be used in production of the vinyl chloride resin molded product without any specific limitations. In this method, the presently disclosed vinyl chloride resin composition is sprinkled onto a mold having a temperature within any of the ranges set forth above. The vinyl chloride resin composition is initially left for not less than 5 seconds and not more than 30 seconds and, after shaking off any excess vinyl chloride resin composition, is then further left for not less than 30 seconds and not more than 3 minutes at an arbitrary temperature. The mold is subsequently cooled to a temperature of not lower than 10°C and not higher than 60°C, and the presently disclosed vinyl chloride resin molded product that is obtained is removed from the mold. A sheet-shaped molded product that imitates the shape of the mold is obtained.

### (Laminate)

The presently disclosed laminate includes a foamed polyurethane molded product and the vinyl chloride resin molded product set forth above. The vinyl chloride resin molded product typically constitutes one surface of the laminate.

As a result of the presently disclosed laminate including a vinyl chloride resin molded product that is formed using the presently disclosed vinyl chloride resin composition and that has excellent fogging resistance, the presently disclosed laminate can suitably be used as an automobile interior material forming an automobile interior component (particularly an automobile instrument panel), for example.

The method by which the foamed polyurethane molded product and the vinyl chloride resin molded product are stacked is not specifically limited and may, for example, be a method such as described below. Specifically, (1) a method in which the foamed polyurethane molded product and the vinyl chloride resin molded product are separately prepared and are subsequently adhered to one another by thermal fusion bonding, thermal adhesion, or using a commonly known adhesive, or (2) a method in which raw materials of the foamed polyurethane molded product such as an isocyanate and a polyol are caused to react and polymerize on the vinyl chloride resin molded product while carrying out polyurethane foaming by a commonly known method to directly form the foamed polyurethane molded product on the vinyl chloride resin molded product may be adopted. The latter method (2) is more suitable because it involves a simple process and enables laminates of various different shapes to be obtained while easily achieving strong adhesion of the vinyl chloride resin molded product and the foamed polyurethane molded product.

### EXAMPLES

The following provides a more specific description of the present disclosure based on examples. However, the present disclosure is not limited to the following examples. In the following description, "%" and "parts" used in expressing quantities are by mass, unless otherwise specified.

Moreover, polyalkylene glycols (polyethylene glycol and polypropylene glycol) used in the examples have a hydroxy group (-OH) at the ends of molecules thereof, unless otherwise specified.

Furthermore, the following methods were used to measure and evaluate the tensile characteristics (tensile strength and tensile elongation) and fogging resistance of a vinyl chloride resin molded sheet as a vinyl chloride resin molded product.

### <Fogging resistance>

An obtained vinyl chloride resin molded sheet (dimensions: 145 mm × 175 mm × 1 mm) was punched out as a circle having a diameter of 80 mm, and then, using a device in accordance with the standard ISO 6452, the vinyl chloride resin molded sheet was placed in a test bottle heated to 100°C, a glass plate cooled to 20°C was set over an opening of the test bottle, and a fogging test was carried out for 3 hours. After completion of the test, the glass plate was left at rest for 1 hour at a temperature of 23°C and a humidity of 50%, and then the 60° reflectance thereof was measured using a glossiness test device (GP-60 produced by Tokyo Denshoku Co., Ltd.). The 60° reflectance of the glass plate was also measured before the test, and glossiness retention (%) of the glass plate was calculated using the following formula. Note that higher glossiness retention indicates that the vinyl chloride resin molded sheet has better fogging resistance.Glossiness retention (%) = 100 × [(Post-test glass plate glossiness)/(Pre-test glass plate glossiness)]

### <Tensile characteristics (tensile strength and tensile elongation)>

An obtained vinyl chloride resin molded sheet was punched out by a No. 1 Dumbbell described in JIS K6251, and then tensile breaking stress (MPa) and tensile breaking elongation (%) were measured in accordance with JIS K7113 under temperature conditions of normal temperature (23°C) and low temperature (-10°C) with a tensing rate of 200 mm/min. Note that a larger value for tensile breaking stress indicates that the vinyl chloride resin molded sheet has better tensile strength. Also note that a larger value for tensile breaking elongation indicates that the vinyl chloride resin molded sheet has better tensile elongation.

### (Example 1)

### <Production of vinyl chloride resin composition>

With the exception of plasticizers (polyester plasticizer and epoxidized soybean oil) and vinyl chloride resin fine particles used as a dusting agent, components indicated in Table 1 were loaded into and mixed in a Henschel mixer. At the point at which the temperature of the mixture rose to 80°C, all of the plasticizers were added, and drying up of the mixture was caused to occur (i.e., the mixture changed to a dry state through absorption of the plasticizers by vinyl chloride resin particles used as a vinyl chloride resin). Thereafter, once the dried-up mixture had cooled to a temperature of 70°C or lower, the vinyl chloride resin fine particles used as the dusting agent were added to the mixture to produce a vinyl chloride resin composition.

### <Formation of vinyl chloride resin molded product>

The obtained vinyl chloride resin composition was sprinkled onto a textured mold that was heated to a temperature of 250°C and, after being left to melt for an arbitrary time, excess vinyl chloride resin composition was shaken off. Thereafter, the textured mold onto which the vinyl chloride resin composition had been sprinkled was placed at rest in an oven set to a temperature of 200°C, and, once 60 seconds had passed after being placed at rest, the textured mold was cooled with cooling water. Once the mold temperature had dropped to 40°C, a 145 mm × 175 mm × 1 mm vinyl chloride resin molded sheet was removed from the mold as a vinyl chloride resin molded product.

The obtained vinyl chloride resin molded product was used to evaluate tensile characteristics (tensile strength and tensile elongation) and fogging resistance. The results are shown in Table 1.

### (Examples 2 to 11 and Comparative Examples 1 and 2)

A vinyl chloride resin composition and a vinyl chloride resin molded product were produced in the same way as in Example 1 with the exception that the type and/or amount of the used polyester plasticizer and/or polyalkylene glycol was changed as indicated in Table 1. The obtained vinyl chloride resin molded product was used to evaluate tensile characteristics (tensile strength and tensile elongation) and fogging resistance. The results are shown in Table 1.

**[Table 1]**

| | | | | Comparative Example 1 | Example 1 | Example 2 | Example 3 | Example 4 | Comparative Example 2 | Example 5 | Example 6 | Example 7 | Example 8 | Example 9 | Example 10 | Example 11 |
|---|---|---|---|---|---|---|---|---|---|---|---|---|---|---|---|---|
| | Vinyl chloride resin | Vinyl chloride resin particles⁽¹⁾ [parts by mass] | | 100 | 100 | 100 | 100 | 100 | 100 | 100 | 100 | 100 | 100 | 100 | 100 | 100 |
| | | Vinyl chloride resin fine particles⁽²⁾ [parts by mass] | | 16 | 16 | 16 | 16 | 16 | 16 | 16 | 16 | 16 | 16 | 16 | 16 | 16 |
| | Polyester plasticizer | Adipic acid polyester A⁽³⁾ [parts by mass] | | - | - | - | - | - | 120 | 120 | 120 | 120 | 120 | 120 | 120 | 150 |
| | | Adipic acid polyester B⁽⁴⁾ [parts by mass] | | 120 | 120 | 120 | 150 | 150 | - | - | - | - | - | - | - | - |
| | Other plasticizer | Epoxidized soybean oil⁽⁵⁾ [parts by mass] | | 5 | 5 | 5 | 5 | 5 | 5 | 5 | 5 | 5 | 5 | 5 | 5 | 5 |
| | Stabilizers | Perchloric acid-substituted hydrotalcite⁽⁶⁾ [parts by mass] | | 2.5 | 2.5 | 2.5 | 2.5 | 2.5 | 2.5 | 2.5 | 2.5 | 2.5 | 2.5 | 2.5 | 2.5 | 2.5 |
| | | Zeolite⁽⁷⁾ [parts by mass] | | 1.2 | 1.2 | 1.2 | 1.2 | 1.2 | 1.2 | 1.2 | 1.2 | 1.2 | 1.2 | 1.2 | 1.2 | 1.2 |
| | | Zinc stearate⁽⁸⁾ [parts by mass] | | 0.2 | 0.2 | 0.2 | 0.2 | 0.2 | 0.2 | 0.2 | 0.2 | 0.2 | 0.2 | 0.2 | 0.2 | 0.2 |
| Formulation | Mold release agent | 12-Hydroxystearic acid⁽⁹⁾ [parts by mass] | | 0.6 | 0.6 | 0.6 | 0.6 | 0.6 | 0.6 | 0.6 | 0.6 | 0.6 | 0.6 | 0.6 | 0.6 | 0.6 |
| | Polyalkylene glycol | Polyethylene glycol C (Mw: 400, mp: 4-8°C)⁽¹⁰⁾ [parts by mass] | | - | 1 | 2 | 1 | 4 | - | 2 | 4 | 10 | - | - | - | 4 |
| | | Polypropylene glycol D (Mw: ≈400, mp: -31°C)⁽¹¹⁾ [parts by mass] | | - | - | - | - | - | - | - | - | - | 1 | 2 | - | - |
| | | Polypropylene glycol E (Mw: ≈700, mp: -31°C)⁽¹²⁾ [parts by mass] | | - | - | - | - | - | - | - | - | - | - | - | 2 | - |
| | Pigment | Black⁽¹³⁾ [parts by mass] | | 1.1 | 1.1 | 1.1 | 1.1 | 1.1 | 1.1 | 1.1 | 1.1 | 1.1 | 1.1 | 1.1 | 1.1 | 1.1 |
| | Total [parts by mass] | | | 246.6 | 247.6 | 248.6 | 277.6 | 280.6 | 246.6 | 248.6 | 250.6 | 256.6 | 247.6 | 248.6 | 248.6 | 280.6 |
| Content relative to 100 parts by mass of vinyl chloride resin | | Polyester plasticizer [parts by mass] | | 103 | 103 | 103 | 129 | 129 | 103 | 103 | 103 | 103 | 103 | 103 | 103 | 129 |
| | | Other plasticizer [parts by mass] | | 4.3 | 4.3 | 4.3 | 4.3 | 4.3 | 4.3 | 4.3 | 4.3 | 4.3 | 4.3 | 4.3 | 4.3 | 4.3 |
| | | Polyalkylene glycol [parts by mass] | | - | 0.86 | 1.72 | 0.86 | 3.45 | - | 1.72 | 3.45 | 8.62 | 0.86 | 1.72 | 1.72 | 3.45 |
| Content relative to 100 parts by mass of polyester plasticizer | | Other plasticizer [parts by mass] | | 4.2 | 4.2 | 4.2 | 3.3 | 3.3 | 4.2 | 4.2 | 4.2 | 4.2 | 4.2 | 4.2 | 4.2 | 3.3 |
| | | Polyalkylene glycol [parts by mass] | | - | 0.83 | 1.67 | 0.67 | 2.67 | - | 1.67 | 3.33 | 8.33 | 0.83 | 1.67 | 1.67 | 2.67 |
| Physical properties of polyalkylene glycol | | Weight-average molecular weight (Mw) | | - | 400 | 400 | 400 | 400 | - | 400 | 400 | 400 | ≈400 | ≈400 | ≈700 | 400 |
| | | Melting point (mp) [°C] | | - | 4-8 | 4-8 | 4-8 | 4-8 | - | 4-8 | 4-8 | 4-8 | -31 | -31 | -31 | 4-8 |
| Evaluation results | Tensile characteristics | Tensile strength | Tensile breaking stress (at 23°C) [MPa] | 6.6 | 6.4 | 6.8 | 5.1 | 5.3 | 6.5 | 6.6 | 6.3 | 6.1 | 6.5 | 6.7 | 6.6 | 5.1 |
| | | | Tensile breaking stress (at -10°C) [MPa] | 14.4 | 13.9 | 14.7 | 11.7 | 11.6 | 13.3 | 14.0 | 12.6 | 13.5 | 13.1 | 14.1 | 13.7 | 11.1 |
| | | Tensile elongation | Tensile breaking elongation (at 23°C) [%] | 296 | 292 | 303 | 316 | 322 | 290 | 291 | 284 | 297 | 291 | 287 | 288 | 311 |
| | | | Tensile breaking elongation (at -10°C) [%] | 197 | 202 | 231 | 259 | 281 | 206 | 230 | 210 | 255 | 206 | 222 | 224 | 287 |
| | Fogging resistance | | Glossiness retention [%] | 82 | 96 | 96 | 95 | 96 | 43 | 96 | 91 | 94 | 88 | 96 | 91 | 91 |

(1) Product name: ZEST^{®} (ZEST is a registered trademark in Japan, other countries, or both) 1700ZI (produced by suspension polymerization; average degree of polymerization: 1,700; average particle diameter: 130 µm); produced by Shin Dai-ichi Vinyl Corporation
(2) Product name: ZEST PQLTX (produced by emulsion polymerization; average degree of polymerization: 800; average particle diameter: 1.8 µm); produced by Shin Dai-ichi Vinyl Corporation
(3) Product name: ADK CIZER HPN-3130 (adipic acid polyester; viscosity: 4,000 mPa·s; SP value: 8.6); produced by Adeka Corporation
(4) Product name: ADK CIZER PN-1430 (adipic acid polyester; viscosity: 3,000 mPa·s; SP value: 9.0); produced by Adeka Corporation
(5) Product name: ADK CIZER O-130S; produced by Adeka Corporation
(6) Product name: ALCAMIZER^{®} 5 (ALCAMIZER is a registered trademark in Japan, other countries, or both); produced by Kyowa Chemical Industry Co., Ltd.
(7) Product name: MIZUKALIZER DS; produced by Mizusawa Industrial Chemicals, Ltd.
(8) Product name: SAKAI SZ2000; produced by Sakai Chemical Industry Co., Ltd.
(9) Product name: ADK STAB LS-12; produced by Adeka Corporation
(10) Product name: Poly(ethylene glycol), average M.W. 400 (polyethylene glycol; weight-average molecular weight: 400; melting point: 4°C to 8°C); produced by Kanto Chemical Co., Inc.
(11) Product name: Polypropylene Glycol, Diol Type, 400 (polypropylene glycol; weight-average molecular weight: approximately 400; melting point: -31°C); produced by FUJIFILM Wako Pure Chemical Corporation
(12) Product name: Polypropylene Glycol, Diol Type, 700 (polypropylene glycol; weight-average molecular weight: approximately 700; melting point: -31°C); produced by FUJIFILM Wako Pure Chemical Corporation
(13) Product name: DA PX 1720(A) Black; produced by Dainichiseika Color and Chemicals Mfg. Co., Ltd.

It can be seen from Table 1 that by using the vinyl chloride resin compositions of Examples 1 to 11, which each contain a vinyl chloride resin, a polyester plasticizer, and a polyalkylene glycol, it is possible to form a vinyl chloride resin molded product having excellent fogging resistance.

In contrast, it can be seen that vinyl chloride resin molded products formed using the vinyl chloride resin compositions of Comparative Examples 1 and 2, which do not contain a polyalkylene glycol, have poor fogging resistance.

### INDUSTRIAL APPLICABILITY

According to the present disclosure, it is possible to provide a vinyl chloride resin composition that is capable of forming a vinyl chloride resin molded product having excellent fogging resistance.

Moreover, according to the present disclosure, it is possible to provide a vinyl chloride resin molded product having excellent fogging resistance.

Furthermore, according to the present disclosure, it is possible to provide a laminate including this vinyl chloride resin molded product.

## Claims

1. A vinyl chloride resin composition comprising a vinyl chloride resin, a polyester plasticizer, and a polyalkylene glycol.

2. The vinyl chloride resin composition according to claim 1, wherein content of the polyalkylene glycol is not less than 0.1 parts by mass and not more than 10 parts by mass relative to 100 parts by mass of the vinyl chloride resin.

3. The vinyl chloride resin composition according to claim 1, wherein the polyalkylene glycol has a weight-average molecular weight of 1,000 or less.

4. The vinyl chloride resin composition according to claim 1, wherein the polyalkylene glycol has a melting point of 20°C or lower.

5. The vinyl chloride resin composition according to claim 1, wherein the polyalkylene glycol includes either or both of polyethylene glycol and polypropylene glycol.

6. The vinyl chloride resin composition according to claim 1, wherein the polyester plasticizer includes an adipic acid polyester.

7. The vinyl chloride resin composition according to claim 1, wherein content of the polyester plasticizer is not less than 30 parts by mass and not more than 200 parts by mass relative to 100 parts by mass of the vinyl chloride resin.

8. The vinyl chloride resin composition according to claim 1 used in powder molding.

9. The vinyl chloride resin composition according to claim 1 used in powder slush molding.

10. A vinyl chloride resin molded product obtained through molding of the vinyl chloride resin composition according to any one of claims 1 to 9.

11. The vinyl chloride resin molded product according to claim 10 for a surface skin of an automobile instrument panel.

12. A laminate comprising: a foamed polyurethane molded product; and the vinyl chloride resin molded product according to claim 10.

13. The laminate according to claim 12 for an automobile instrument panel.
